# EUROPÄISCHE PATENTSCHRIFT

(11) **EP 1 035 359 B1**
(45) Veröffentlichungstag und Bekanntmachung des Hinweises auf die Patenterteilung: **16.04.2003**
(21) Anmeldenummer: 00103211.9
(22) Anmeldetag: 17.02.2000
(51) Int. Cl.: F16J 15/08

(54) **Metallische Flachdichtung**
Metal gasket
Garniture de joint métallique

(30) Priorität: 12.03.1999 DE 19911085
(43) Veröffentlichungstag der Anmeldung: 13.09.2000
(73) Patentinhaber: Federal -Mogul Sealing Systems GmbH, 57562 Herdorf (DE)
(72) Erfinder: Cierocki, Klaus, Dipl.-Ing., 57562 Herdorf (DE)

(56) Entgegenhaltungen:
- EP-A- 0 407 090
- EP-A- 0 528 698
- EP-A- 0 866 245
- DE-A- 19 654 283

## Beschreibung

Die Erfindung betrifft eine metallische Flachdichtung mit Durchgangsöffnungen, insbesondere Zylinderkopfdichtung für Verbrennungskraftmaschinen, siehe z.B. das Dokument EP-A-407090, mit einer Dichtungsplatte mit mindestens einer Sicke die Durchgangsöffnungen umschließt und die Dichtungsplatte am Rand der Durchgangsöffnungen einen Abschnitt aufweist dessen Materialstärke gegenüber dem übrigen Bereich der Dichtungsplatte verringert ist, wobei der Endbereich des Abschnittes radial nach außen in Richtung der Oberfläche der Dichtungsplatte zurückgebogen ist.

Aus der EP 0528698 A1 ist eine weitere gattungsgemäße Flachdichtung zu entnehmen. Die Flachdichtung weist eine elastische Metallplatte auf, die am Brennraumrand verdünnt ist und unter Bildung eines Falzes umgelegt ist. Auf diese Weise ist am Brennraumrand eine größere Materialstärke erzeugt, als im Bereich der die Brennraumöffnung umgebenden Sicken. Der umgelegte Falz stellt für die Sicke einen Pressungsbegrenzer dar. Die dynamische Abdichtung des Brennraumes erfolgt über die Sicke. Durch die Reduzierung der Materialstärke am Rand der Durchgangsöffnungen können mit der bekannten Flachdichtung minimale Überstände erzeugt werden, wodurch beim Einbau der Flachdichtung die beim Anziehen der Befestigungsschrauben auftretenden Bauteilverzüge minimiert werden. Das Dichtungsprinzip der Flachdichtung beruht auf einer Trennung zwischen zwei Zonen, zum Einen die Dichtzone im Bereich des Verpressungsbegrenzers, die als statische Dichtzonen bezeichnet werden kann und zum Anderen die Dichtzone im Bereich der Sicken, die als elastische Dichtzone bezeichnet werden kann. Durch diese Trennung ist in radialer Richtung ein relativ großer Platzbedarf notwendig, das führt bei Verbrennungskraftmaschinen mit schmalen Stegen zwischen benachbarten Brennraumöffnungen zu Herstellungsproblemen, so daß man in diesem Bereich auch schon den Pressungsbegrenzer weggelassen hat. Das führt allerdings dazu, daß in diesem Bereich dann keine hohe Pressung aufgebracht werden kann.

Der Erfindung liegt die Aufgabe zugrunde, eine Flachdichtung mit minimaler Materialverstärkung im Bereich von Durchgangsöffnungen zu schaffen, die auch bei Verbrennungskraftmaschinen mit schmalen Stegbreiten einsetzbar ist.

Diese Aufgabe wird erfindungsgemäß durch die Merkmale des Patentanspruch 1 gelöst. Vorteilhafte Ausgestaltungen der Erfindung sind in den Unteransprüchen dokumentiert.

Bei der erfindungsgemäßen Flachdichtung sind elastische und statische Dichtzonen in nur einer Ebene angeordnet. Auf diese Weise ist es möglich, im schmalen Stegbereich sowohl eine Materialverstärkung zu schaffen, als auch ein dynamisches Dichtelement anzuordnen. Die Erfindung ist anhand von Ausführungsbeispielen in der Zeichnung dargestellt und wird im folgenden näher erläutert.
Es zeigen:
- Fig. 1: Draufsicht auf eine erfindungsgemäße Zylinderkopfdichtung
- Fig. 2 a, b: Ansicht gem. Schnittlinie II-II
- Fig. 3 a, b: Alternative Ausgestaltung gem. Fig. 2
- Fig. 4 a, b: weitere Alternative gem. Fig. 2
- Fig. 5 a, b: weitere Alternative gem. Fig. 2

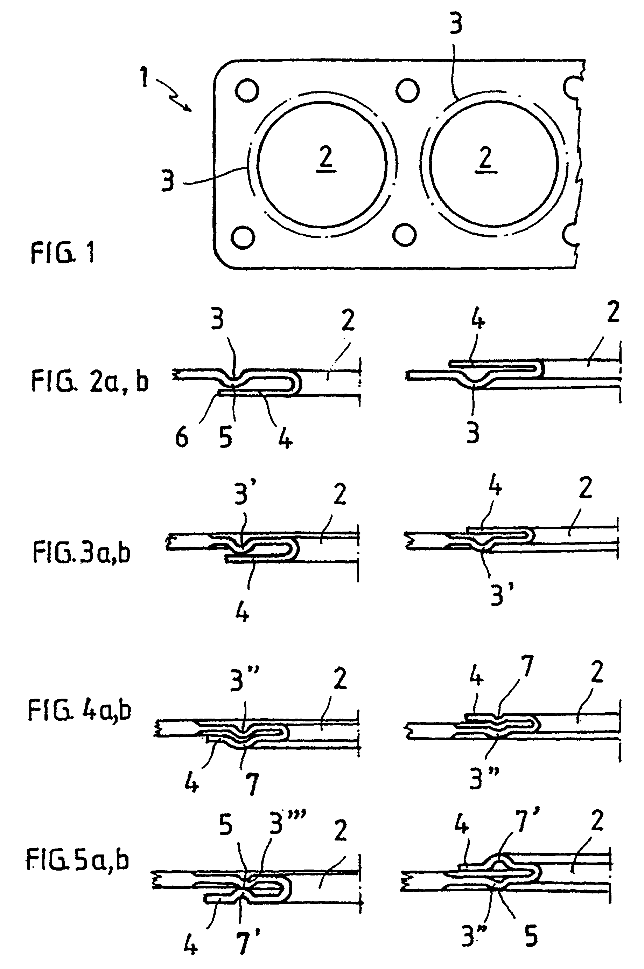

Die in der Figur 1 dargestellte Flachdichtung 1 dient zur Abdichtung des Dichtungsspaltes zwischen dem Zylinderkopf und dem Zylinderblock einer Verbrennungskraftmaschine Die Flachdichtung weist mehrere Durchgangsöffnungen 2 auf, die den Brennraumöffnungen der Verbrennungskraftmaschine angepaßt sind. Die Abdichtung jeder Durchgangsöffnung 2 erfolgt über eine Sicke 3. Die Flachdichtung besteht aus nur einer einzigen Dichtungsplatte, es ist jedoch auch möglich, noch zusätzliche Metallagen, die als Distanzlagen fungieren, hinzuzufügen.

Wie aus der Fig. 2 zu erkennen, weist die Dichtungsplatte einen Abschnitt 4 mit gegenüber dem übrigen Bereich der Flachdichtung verringerter Materialstärke. In der Figur 2 a ist der Abschnitt 4 in Richtung auf den Scheitelpunkt 5 der Sicke der Sicke 3 zurückgebogen. Der Endbereich 6 ist in radialer Richtung etwas über die Ebene des Scheitelpunktes 5 hinweggebogen, so daß die Sicke 3 auf den Abschnitt 4 aufliegt. In der Fig. 2 b ist der Abschnitt auf die andere Oberfläche der Dichtungsplatte zurückgebogen. In den Figuren 3, 4, 5 ist dies analog dargestellt. In der Figur 3 ist die Sicke 3' in den Bereich mit reduzierter Materialstärke verlagert. Auf diese Weise läßt sich ein weit geringerer Überstand erzeugen, als bei einer Variation gem. Fig. 2.
Je nach Verbrennungskraftmaschine kann es notwendig sein, die Höhe und Elastizität der Sicke 3, 3' unterschiedlich auszubilden.
So ist es auch denkbar, wie in der Fig. 4 und 5 dargestellt, daß zusätzlich zur Sicke 3, 3', 3", 3''' und Stützsicke 7, 7'im Abschnitt 4 angeordnet ist. Sicke 3, 3', 3'', 3''', und Stützsicke 7, 7' könnten gleichgerichtet überdeckend ineinander liegen (Fig. 4 a, b) oder auch wie in der Figur 5 dargestellt mit ihren Scheitelpunkten aufeinander zu- oder voneinander weggerichtet sein. Um eine gleichmäßige Pressungsverteilung über den Umfang der Durchgangsöffnungen 2 zu erzeugen, ist es von Vorteil, die Materialstärke des Abschnitt 4 in Umfangsrichtung veränderlich zu gestalten.
So kann in der Nähe von Befestigungsschrauben (nicht dargestellt) z.B. eine geringere Materialstärke vorgesehen werden, als in Bereichen zwischen zwei Befestigungsschrauben.

## Patentansprüche

1. Metallische Flachdichtung mit Durchgangsöffnungen, insbesondere Zylinderkopfdichtung für Verbrennungskraftmaschinen, mit einer Dichtungsplatte mit mindestens einer Sicke die die Durchgangsöffnungen umschließt und die Dichtungsplatte am Rand der Durchgangsöffnungen einen Abschnitt aufweist dessen Materialstärke gegenüber dem übrigen Bereich der Dichtungsplatte verringert ist wobei der Endbereich des Abschnittes radial nach außen in Richtung der Oberfläche der Dichtungsplatte zurückgebogen ist, **dadurch gekennzeichnet, daß** die Sicke (3, 3', 3'', 3"') in der Ebene des zurückgebogsnen Abschnittes (4) angeordnet ist.

2. Metallische Flachdichtung nach Anspruch 1, **dadurch gekennzeichnet, daß** der Endbereich des zurückgebogenen Abschnittes (4) sich in radialer Richtung mindestens bis zur Ebene des Scheitelpunktes (5) der Sicke (3, 3', 3", 3''') erstreckt.

3. Metallische Flachdichtungnach Anspruch 1 und 2, **dadurch gekennzeichnet, daß** die Sicke (3, 3', 3'', 3''') in dem mit reduzierter Materialstärke ausgebildeten Abschnitt (4) angeordnet ist.

4. Metallische Flachdichtung nach Anspruch 1 bis 3, **dadurch gekennzeichnet, daß** im Abschnitt 84) eine Stützsicke (7, 7') angeordnet ist.

5. Metallische Flachdichtung nach den Ansprüchen 1 bis 4, **dadurch gekennzeichnet, daß** die Scheitelpunkte (5) von Sicke (3", 3''') und Stützsicke (7, 7') etwa in der gleichen Ebene angeordnet sind.

6. Metallische Flachdichtung nach den Ansprüchen 1 bis 5, **dadurch gekennzeichnet, daß** Sicke (3'') und Stützsicke (7) gleichgerichtet überdeckend ineinander angeordnet sind.

7. Metallische Flachdichtung nach den Ansprüchen 1 bis 5, **dadurch gekennzeichnet, daß** die Scheitelpunkte (5) von Sicke (3"') und Stützsicke (7') aufeinander zu- oder voneinander weggerichtet sind.

8. Metallische Flachdichtung nach den Ansprüchen 1 bis 7, **dadurch gekennzeichnet, daß** der Abschnitt (4) in Umfangsrichtung unterschiedliche Materialstärken aufweist.

## Claims

1. Metal flat gasket with through-openings, in particular a cylinder head gasket for internal combustion engines, having a gasket sheet with at least one bead which surrounds the through-openings and the gasket sheet has a portion at the edge of the through-openings, the material thickness of which is reduced relative to the remaining region of the gasket sheet, the end region of the portion being bent back radially outwards in the direction of the surface of the gasket sheet, **characterised in that** the bead (3, 3', 3'', 3''') is disposed in the plane of the bent-back portion (4).

2. Metal flat gasket according to claim 1, **characterised in that** the end region of the bent-back portion (4) extends in the radial direction at least up to the plane of the crown (5) of the bead (3, 3', 3", 3"').

3. Metal flat gasket according to claim 1 and 2, **characterised in that** the bead (3, 3', 3", 3''') is disposed in the portion (4) which is configured with reduced material thickness.

4. Metal flat gasket according to claim 1 to 3, **characterised in that** a support bead (7, 7') is disposed in the portion (4).

5. Metal flat gasket according to the claims 1 to 4, **characterised in that** the crowns (5) of bead (3'', 3''') and support bead (7, 7') are disposed approximately in the same plane.

6. Metal flat gasket according to the claims 1 to 5, **characterised in that** bead (3'') and support bead (7) are disposed in a parallel manner, one overlapping the other.

7. Metal flat gasket according to the claims 1 to 5, **characterised in that** the crowns (5) of bead (3''') and support bead (7') are orientated towards each other or away from each other.

8. Metal flat gasket according to the claims 1 to 7, **characterised in that** the portion (4) has different material thicknesses in the circumferential direction.

## Revendications

1. Joint plat métallique comportant des ouvertures de passage, en particulier un joint de culasse pour moteurs à combustion interne, comprenant une plaque d'étanchéité pourvue d'au moins une moulure qui entoure les ouvertures de passage, la plaque d'étanchéité comprenant au niveau du bord des ouvertures de passage une section dont l'épaisseur est réduite par rapport aux autres zones de la plaque d'étanchéité, la zone d'extrémité de la section étant repliée radialement vers l'extérieur en direction de la surface supérieure de la plaque d'étanchéité, **caractérisé en ce que** la moulure (3, 3', 3", 3"') est disposée dans le plan de la section repliée (4).

2. Joint plat métallique selon la revendication 1, **caractérisé en ce que** la zone d'extrémité de la section repliée (4) s'étend en direction radiale au moins jusqu'au plan du sommet (5) de la moulure (3, 3', 3", 3"').

3. Joint plat métallique selon la revendication 1 ou 2, **caractérisé en ce que** la moulure (3, 3', 3'', 3''') est disposée dans la section (4) réalisée avec l'épaisseur réduite.

4. Joint plat métallique selon la revendication 1, 2 ou 3, **caractérisé en ce qu'**une moulure d'appui (7, 7') est disposée dans la section (4).

5. Joint plat métallique selon la revendication 4, **caractérisé en ce que** les sommets (5) de la moulure (3", 3"') et de la moulure d'appui (7, 7') sont disposés sensiblement dans le même plan.

6. Joint plat métallique selon la revendication 4 ou 5, **caractérisé en ce que** la moulure (3") et la moulure d'appui (7) sont disposées l'une dans l'autre dans la même direction en se recouvrant.

7. Joint plat métallique selon la revendication 4 ou 5, **caractérisé en ce que** les sommets (5) de la moulure (3''') et de la moulure d'appui (7') sont dirigées l'une vers l'autre ou l'une en éloignement de l'autre.

8. Joint plat métallique selon l'une quelconque des revendications précédentes, **caractérisé en ce que** la section (4) présente des épaisseurs différentes dans la direction périphérique.
